Europäisches Patentamt

European Patent Office

Office européen des brevets

(19)

(11) Numéro de publication: **0 209 443**
**B1**

(12) **FASCICULE DE BREVET EUROPEEN**

(45) Date de publication du fascicule du brevet: **24.10.90**

(51) Int. Cl.⁵: **A 01 C 7/04, A 01 G 13/02**

(21) Numéro de dépôt: **86401481.6**

(22) Date de dépôt: **03.07.86**

(54) **Roue semeuse perfectionnée remplissant complémentairement les fonctions d'épandeur-localisateur de microgranules.**

(30) Priorité: **12.07.85 FR 8510710**

(43) Date de publication de la demande:
**21.01.87 Bulletin 87/04**

(45) Mention de la délivrance du brevet:
**24.10.90 Bulletin 90/43**

(84) Etats contractants désignés:
**AT BE CH DE FR GB IT LI LU NL SE**

(56) Documents cités:
**US-A-3 154 032**
**US-A-3 468 267**

(73) Titulaire: **Société d'Extrusion et de Transformation**
**12, rue Christophe Colombe**
**F-75008 Paris (FR)**

(72) Inventeur: **Henrio, Germain**
**Leschu**
**F-56300 Saint-Gérand/Pontivy (FR)**

(74) Mandataire: **Foiret, Claude et al**
**ATOCHEM Département Propriété Industrielle**
**F-92091 Paris la Défense 10 Cédex 42 (FR)**

## Description

Le domaine de l'invention concerne l'épandage de précision de divers produits phytosanitaires se présentant le plus souvent sous forme de microgranulés, au moyen de machines dites plastisemeuses dont la fonction principale reste le paillage/semage sous film plastique.

Les microgranulés sont des solides, de très petites dimensions, dont le titre en matière active est étudié avec précision afin de pouvoir être employés directement par les exploitants agricoles pour combattre un parasite considéré.

D'après la norme AFNOR/NFU 4300 d'Août 1974, voici les dimensions respectives des:
MICROGRANULES, diamètre compris entre 150 et 600 microns soit entre 0,15 et 0,6 mm,
GRANULES FINS, diamètre compris entre 600 microns et 2 mm,
MACROGRANULES, diamètre compris entre 2 et 5 mm.

Ces microgranulés peuvent être utilisés pour le traitement des parties aériennes des végétaux mais ils ont plutôt été étudiés pour avoir un comportement de poudres lourdes, efficaces contre la dérive du fait du vent au moment de l'épandage de façon à exercer leur action dans le sol, au voisinage de la plantule ou au niveau des racines.

Les spécialités phytosanitaires justiciables de cette présentation sont:
les insecticides (nématicides), contre les vers et larves d'insectes divers,
les hélicides, contre les limaces,
les herbicides (désherbants systémiques),
les fongicides, contre les champignons et moisissures diverses.

Par ailleurs, des engrais peuvent aussi être distribués par cette voie.

L'utilisstion de ces produits implique l'emploi des machines spécialisées complexes, lourdes, encombrantes et onéreuses avec des têtes d'éclatement multiples.

Les produits phytosanitaires peuvent être répartis dans les champs en pleine surface, par des buses dont les cones de projection se recouvrent partiellement, ou de façon localisée linéairement sur la ligne de semis ou de part et d'autre de la ligne de semis.

Dans le US-A-3 154 032 est décrit un dispositif pour planter à travers un film en plastique. Ce dispositif est constitué d'un genre de chenille sur laquelle sont alignés des plantoirs.

Ces plantoirs sont alimentés de façon successives tout d'abord en grains puis en fertilisant. Un tel dispositif, nécessitant une machine complexe possédant au moins deux roues permettant de tendre et d'actionner la chenille est peu fiable sur un terrain imparfaitement plan. Dans ce cas il y a irrégularité dans la distribution en grains et dans la distribution en fertilisant. S'agissant en outre, non pas d'une roue semeuse unique, mais d'un ensemble d'au moins deux roues et d'une chenille munie de plantoirs, l'entretien d'un tel ensemble est des plus laborieux.

L'objet de la présente invention est un dispositif permettant simultanément l'ensemencement à travers un film plastique et la distribution localisée ponctuellement de tous produits microgranulés tels qu'engrais, insecticides, herbicides, fongicides etc....

Il a été trouvé que la consommation en microgranulés est réduite des deux tiers par la distribution localisée de ces produits.

Le dispositif selon l'invention consiste dans la combinaison d'un semoir de précision et d'un système de dosage de microgranulés.

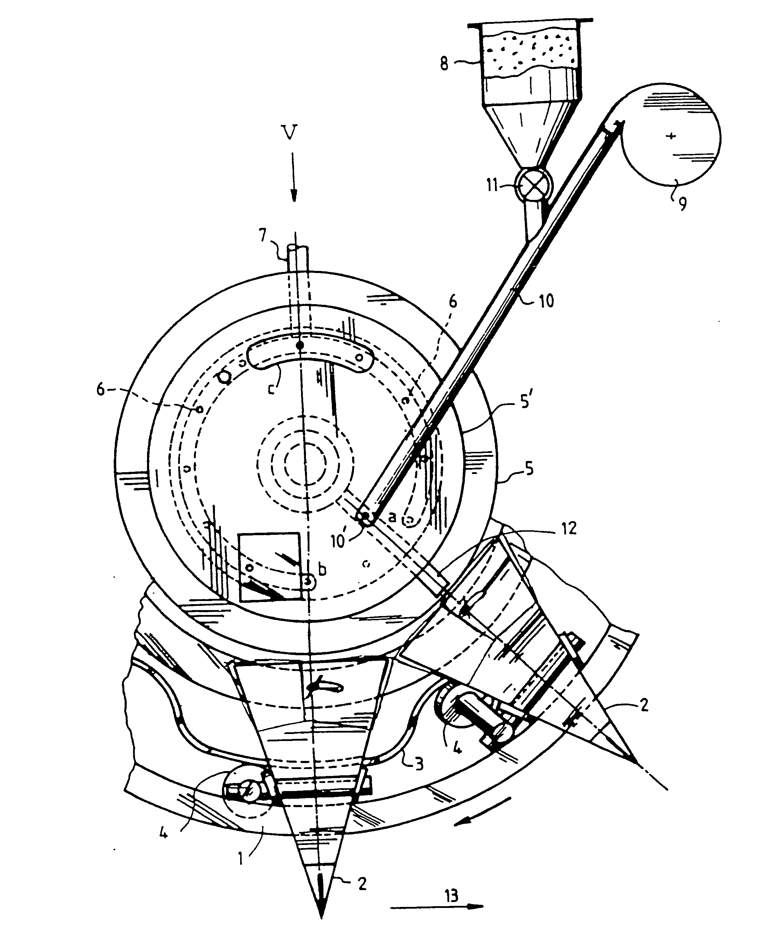

La figure unique jointe permettra de mieux comprendre le fonctionnement du dispositif objet de la présente invention.

On peut y voir:

En (1) la roue du semoir de précision, munie à sa périphérie de becs semoirs (2), régulièrement espacés. Ces becs reçoivent les graines à semer d'un conduit (12) émanant du distributeur de graines (5) (5'). Ce distributeur de graines est du type connu à dépression soufflage décrit dans le brevet US-A-1 331 235 selon lequel une turbine ou ventilateur aspire les graines d'une trémie pour les envoyer dans le distributeur à ouvertures réglables pour laisser passer à intervalles constants lesdites graines vers les semoirs ou les moyens conduisant aux semoirs.

Il a été placé pour des raisons de commodité au centre de la roue semeuse, mais il est bien évident qu'une disposition excentrée, et même extérieure à la roue ne font pas sortir du domaine de l'invention.

Les becs semoirs sont ouverts ou fermés par la coopération d'une came (3) et de galets (4) associés à chaque bec semoir.

Les graines arrivant par le conduit (7) de la trémie à graines non représentée sont sélectionnées une par une par le disque à trous (6) du distributeur (5) (5'). Un tel disque est soumis sur une de ses faces à la dépression créée par un ventilateur V non représenté, et qui se manifeste le long de l'arc (a) (b) de la couronne de trous. L'arc (c) correspond à une fenêtre de contrôle qui permet de s'assurer visuellement qu'une seule graîne est maintenue par dépression au droit de chaque trou (6). Le refoulement de ce ventilateur est utilisé pour souffler les graines une à une dans les becs semoirs (2) à travers le conduit (12) lorsque la position désirée pour le semage a été atteinte par l'entrée en contact du galet (4) avec la came (3) qui provoque l'ouverture du bec semoir.

Le dispositif selon l'invention comprend une trémie à microgranulés (8) sur le conduit de sortie de laquelle est adapté un distributeur volumétrique (11) de type connu en soi, tel qu'une roue à alvéoles ou une vis sans fin. L'entraînement, non représenté, de ce distributeur volumétrique est tel qu'en en faisant varier la vitesse, on fait varier le débit de microgranulés évacués dans la canalisation (10). La canalisation (10) se trouve par rapport au disque à trous (6) du même côté que le conduit (12). Un ventilateur (9) crée un courant d'air en direction du distributeur de graines (5) (5').

L'introduction des microgranulés dans le conduit (12) se fait en un point (10') qui coïncide ou non avec le point d'intersection de l'axe de ce conduit (12) et du cercle lieu des centres des trous (6), selon la taille et la densité des microgranulés.

Dans une variante du dispositif selon l'invention, le ventilateur (9) est un ventilateur à double corps, dans lequel l'un des corps remplace le ventilateur V dont il a été question ci dessus pour maintenir par dépression les graînes sur les trous (6) du disque perforé du distributeur de graînes (5) (5').

L'épandage avec localisation de microgranulés concomitant avec le semage implique une bonne étanchéité à ces microgranulés entre les becs semoirs. Les ouvertures de ceux-ci, tournées vers le distributeur (5) (5') doivent former une couronne continue, sans jour entre les becs semoirs.

Dans le cas de roues semeuses à nombre de becs semoirs variable, telles que décrites dans la demande de brevet français no 84 19200, l'espacement entre les becs semoirs étant variable, on peut atteindre cette étanchéité en réalisant les ouvertures des becs semoirs en deux parties coulissant l'une par rapport à l'autre et maintenues en position par des écrous à oreilles permettant un réglage rapide.

La largeur d'entrée des becs semoirs (2) est alors variable suivant le nombre de ces becs.

Le sens de déplacement de la roue semeuse est représenté par la flèche (13).

## Revendications

1. Roue semeuse (1) appartenant à un semoirs de précision capable avec l'usage d'un bec semoir (2) de planter des graines à travers un film en plastique, caractérisée en ce qu'elle comprend un distributeur volumétrique (11) pour introduire dans le bec semoir une quantité exacte et variable de produits phytosanitaires ou d'engrais sous forme de microgranulés, et des moyens pour que les graines et les produits phytosanitaires ou engrais soient ensuite introduits simultanément dans le sol.

2. Roue semeuse selon la revendication 1, caractérisée en ce que le distributeur volumétrique (11) coopérant avec un ventilateur (9) et un distributeur de graine du type à dépression soufflage (5, 5'), l'introduction des microgranulés dans le bec semoir se fait par l'intermédiaire du conduite (12) emanant du distributeur de graine (5, 5'), et aboutissant au bec semoir (2).

3. Roue semeuse selon l'un des revendications 1 ou 2 caractérisée en ce que le ventilateur (9) du distributeur volumétrique (11) et celui du distributeur de graine du type à dépression soufflage (5, 5') ne font qu'un.

## Patentansprüche

1. Zu einer Einzelkornsämaschine gehöriges Särad (1), das zum Gebrauch mit einem Sämaschinenschnabel (2) zum Pflanzen von Körnern durch eine Kunststoffolie hindurch geeignet ist, dadurch gekennzeichnet, daß es eine volumetrische Dosiereinrichtung (11) für die Zufuhr einer exakten und veränderlichen menge Pflanzenschutz- oder Düngemittel in mikrogranulierter Form in den Sämaschinenschnabel und Mittel, um die Körner und die Pflanzenschutz- oder Düngemittel anschließend gleichzeitig in den Boden einführen zu können, umfaßt.

2. Särad nach Anspruch 1, dadurch gekennzeichnet, daß die volumetrische Dosiereinrichtung (11) mit einem Gebläse (9) und einer Korn-Dosiereinrichtung des Unterdruckgebläsetyps (5, 5') zusammenwirkt und die Zufuhr der Mikrogranulate in den Sämaschinenschnabel mittels des von der Korn-Dosiereinrichtung (5, 5') ausgehenden und zum Sämaschinenschnabel (2) führenden Steuerzwischenstücks (12) erfolgt.

3. Särad nach Anspruch 1 oder 2, dadurch gekennzeichnet, daß das Gebläse (9) der Dosiereinrichtung (11) und das der Korn-Dosiereinrichtung des Unterdruckgebläsetyps (5, 5') nur eines ist.

## Claims

1. A sowing wheel (1) associated with a high-precision seed drill using a seed drill tip (2) for planting seeds through a plastics film, characterized in that it comprises a volumetric distributor (11) for introducing into the seed drill tip a precise and variable quantity of plant health products or fertilizers in the form of microgranules, and means for the subsequent simultaneous introduction of the seeds and the plant health products or fertilizers into the soil.

2. A sowing wheel according to claim 1, characterized in that the volumetric distributor (11) cooperates with a fan (9) and a negative pressure blowing type of seed distributor (5, 5'), the introduction of the microgranules into the seed drill tip being performed via the conduit (12) extending from the seed distributor (5, 5') and terminating at the seed drill tip (2).

3. A sowing wheel according to either of claims 1 or 2, characterized in that the fan (9) of the volumetric distributor (11) and the fan of the negative pressure blowing type seed distributor (5, 5') are one and the same.